# EUROPEAN PATENT SPECIFICATION

(11) **EP 0 588 441 B1**
(45) Date of publication and mention of the grant of the patent: **23.07.1997**
(21) Application number: 93202708.9
(22) Date of filing: 17.09.1993
(51) Int. Cl.: B01D 47/16

(54) **Installation for removing dust from a gas**
Vorrichtung zum Entstauben eines Gasstromes
Dispositif pour séparer des poussières d'un gaz

(30) Priority: 17.09.1992 NL 9201605
(43) Date of publication of application: 23.03.1994
(73) Proprietor: Jacobs, Johannes Jozef, NL-5921 JL Venlo (NL)
(72) Inventor: Jacobs, Johannes Jozef, NL-5921 JL Venlo (NL)
(74) Representative: de Bruijn, Leendert C.

(56) References cited:
- DE-A- 2 816 631
- FR-A- 1 202 388
- FR-A- 2 162 144

## Description

The invention relates to an installation for removing dust from a gas, which installation is provided with a rotor which is rotatable about a rotary shaft with means for supplying liquid in the vicinity of the rotary shaft of the rotor, and means for supplying the gas to be cleaned to the vicinity of the rotary shaft of the rotor, whereby the rotor is provided with a chamber which is separated into two parts by a partition.

An installation of this type is disclosed in DE-A-2816631.

The object of the invention is to improve the effectiveness of the dust removal.

According to the invention the installation as described in the preamble is characterized in that the chamber is closed at its circumference, the outer edge of the partition is located some distance from the outermost limiting wall of the chamber, so as to cause air flow below the partition in the direction of the outer circumference of the rotor and then back above the partition towards the shaft, the guide blades are fitted below and above the parition, and the rotor is provided with a liquid discharge passage in the vicinity of the wall closing the chamber at its circumference, and a feed passage and discharge passage for the gas entering respectively leaving the chamber are arranged close to the axis of the rotor and separated from one another by said partition.

When the construction according to the invention is used the gas is forced to move, together with the liquid supplied, in the direction of the outer circumference of the chamber, where the liquid forms a water screen adhering to the wall of the chamber, the direction of the gas flow being changed in the vicinity of said water screen. During movement to the outer circumference together with the gas stream, the dust particles and the like present in the gas stream will be moistened and when the direction of movement of the gas is reversed in the vicinity of the outer circumference of the chamber the dust particles and the like moistened in this way will be absorbed by the water screen formed at this location so that they can be removed via the liquid discharge passage.

The invention will be explained in more detail below with reference to an illustrative embodiment of an installation according to the invention, which is shown diagrammatically in the accompanying figures.

Figure 1 shows a cross section through figure 2, seen along the line I-I in figure 2.

Figure 2 shows a radial cross section of the embodiment according to the invention.

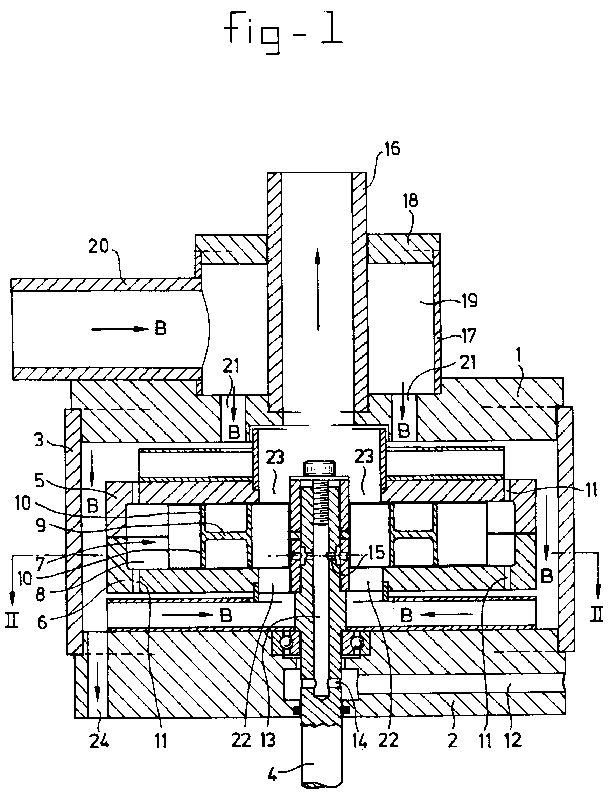

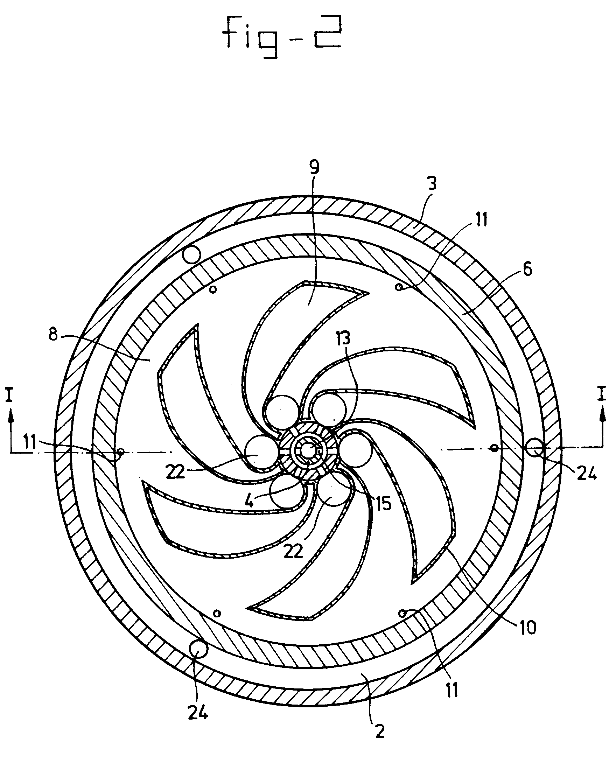

The installation shown in Figures 1 and 2 comprises two plate-shaped sections 1 and 2, which are connected to one another with an annular element 3 placed between them, which annular element 3 keeps said plate-shaped sections 1 and 2 a distance apart. A vertical shaft 4 is rotatably mounted in the lower disc-shaped section 2. The shaft 4 is connected to a drive element, which is not shown in more detail, for bringing the shaft 4 into rotation. A rotor 7 composed of two dishes 5 and 6 is attached to the shaft 4. The rotor dishes 5 and 6 delimit a chamber 8, which at its outer circumference is closed by the outer edges of the dishes 5 and 6, which outer edges face one another. The chamber 8 is divided into two sections by a disc 9, which rotates with the rotor and extends perpendicularly to the shaft 4, the outermost limiting edge of said disc 9 being located some distance away from the inside of the outermost limiting wall of the chamber 8.

Blades 10 are fitted above and below the partition 9, as shown in Figure 2.

Passages 11 which extend parallel to the shaft 4 are provided in the dishes 5 and 6 at a relatively short distance from the inside of the outermost circumference wall of the chamber 8.

A passage 12 is provided in the plate-shaped section 2, which passage 12 is openly connected via holes 14, which run radially through the shaft 4, to a passage 13 which extends axially through the shaft 4.

The passage 13 is further connected, via radial holes 15, to the area located below the partition 9 in the chamber 8.

A tube connector 16 is connected at a hole provided in the centre of the plate-shaped section. Said tube connector 16 is surrounded by a tube section 17 which, together with the plate-shaped section 2 and a plate-shaped section 18 fitted at the end thereof, delimits a chamber 19, to which a further tube connector 20 is connected. The chamber 19 is connected, via holes 21 provided in the plate-shaped section, with the chamber between the plate-shaped sections 1 and 2 in which the rotor is arranged.

The air or gas to be cleaned can now be drawn in, for example with the aid of a fan or air pump connected to the tube connector 16, so that said air or gas flows into the installation via tube connector 20 and then, as indicated by arrows B, flows through holes 21 into the chamber containing the rotor and, in said chamber, as also indicated by arrows B, around the rotor to air feed passages 22, which are provided in the vicinity of the shaft 4 in the dish-shaped section 6 of the rotor 7. The air or gas to be cleaned flows via said passages 22 into that section of the chamber 8 which is located below the partition 9, in the direction of the outer circumference of the rotor and then back above the partition in the direction of the shaft 4 to the air discharge passages 23, which are provided in the dish-shaped section 5 and are openly connected to the connector 16.

At the same time liquid, for example water, under pressure is supplied via the passage 12 and the bore 13 in the shaft 4, in order to be sprayed via the holes 15 into the interior of the chamber 8 at the level of air feed passages 22. With this arrangement, the liquid sprayed in will to some extent be atomised and moisten dust particles present in the gas or air. The liquid also forms a liquid film on that limiting wall of the chamber 8 which extends concentrically about the axis of the shaft 4, the thickness of said liquid film being determined by the distance between the liquid discharge passages 11, via which the liquid will flow out of the interior of the chamber, and that limiting wall of the chamber 8 which extends concentrically about the axis of rotation of the shaft 4.

The direction of movement of the air or gas is, as already stated above, reversed through 180° at the level of the outermost limiting wall of the chamber 8. The moistened dust particles will tend to continue moving outwards and will be captured by the liquid film on the outermost limiting wall of the chamber 8. The dust particles captured in this way will, together with the liquid, be removed from the rotor via the liquid discharge passages 11 and removed from the installation via passage 24 provided in the plate-shaped section 2.

It will be clear that the invention is not restricted to a rotor rotating about a vertical rotary shaft since, for example, an embodiment having a horizontal arrangement of the rotary shaft is also possible.

## Claims

1. Installation for removing dust from a gas, which installation is provided with a rotor (7) which is rotatable about a rotary shaft (4), with means (15) for supplying liquid in the vicinity of the rotary shaft of the rotor, and with means (20, 21) for supplying the gas to be cleaned to the vicinity of the rotary shaft (4) of the rotor (7), whereby the rotor (7) is provided with a chamber (8) which is separated into two parts by a partition (9), characterized in that the chamber (8) is closed at its circumference, that the outer edge of the partition (9) is located some distance from the outermost limiting wall of the chamber (8), so as to cause air flow below the partition (9) in the direction of the outer circumference of the rotor (7) and then back above the partition (9) towards the shaft (4), that guide blades (10) are fitted below and above the parition (9), and that the rotor (7) is provided with a liquid discharge passage (11) in the vicinity of the wall closing the chamber at its circumference, and in that a feed passage (21, 22) and discharge passage (23) for the gas entering respectively leaving the chamber (8) are arranged close to the axis of the rotor (7) and separated from one another by said partition (9).

2. Installation according to claim 1, characterized in that the liquid is supplied to the interior of the rotor (7) via a shaft (4) which supports the rotor (7).

## Patentansprüche

1. Anlage zum Entstauben eines Gases, wobei diese Anlage versehen ist mit einem Rotor (7), der um eine drehbare Welle (4) drehbar ist, mit einer Einrichtung (15) zum Heranführen von Flüssigkeit bis nahe an die drehbare Welle des Rotors, und mit Einrichtungen (20, 21) zum Heranführen des zu reinigenden Gases bis nahe an die drehbare Welle (4) des Rotors (7), wobei der Rotor (7) mit einer Kammer (8) versehen ist, die durch eine Trennwand (9) in zwei Teile getrennt ist, dadurch gekennzeichnet, daß die Kammer (8) an ihrem Umfang geschlossen ist, daß sich der äußere Rand der Trennwand (9) in einem Abstand von der äußersten Begrenzungswand der Kammer (8) befindet, so daß ein Luftstrom unterhalb der Trennwand (9) in der Richtung des äußeren Umfangs des Rotors (7) und dann oberhalb der Trennwand (9) zurück in Richtung zu der Welle (4) bewirkt wird, daß Führungsflügel (10) unter und über der Trennwand (9) befestigt sind, und daß der Rotor (7) mit einem Flüssigkeitsabführungskanal (11) in der Nähe der Wand versehen ist, die die Kammer an ihrem Umfang schließt, und daß ein Zuführungskanal (21, 22) und ein Abführungskanal (23) für das in die Kammer (8) eintretende bzw. das aus dieser austretende Gas nahe an der Achse des Rotors (7) angeordnet und durch die Trennwand (9) voneinander getrennt sind.

2. Anlage nach Anspruch 1, dadurch gekennzeichnet, daß die Flüssigkeit über eine Welle (4), auf der der Rotor (7) gelagert ist, ins Innere des Rotors (7) geführt wird.

## Revendications

1. Dispositif pour séparer des poussières d'un gaz, lequel dispositif comprend un rotor (7) ayant une aptitude en rotation autour d'un arbre rotatif (4), un moyen (15) pour amener du liquide dans le voisinage de l'arbre rotatif du rotor, et de moyens (20, 21) pour amener le gaz à nettoyer dans le voisinage de l'arbre rotatif (4) du rotor (7), le rotor (7) comportant une chambre (8) qui est séparée en deux parties par une cloison (9), caractérisé en ce que la chambre (8) est fermée en sa circonférence, en ce que le bord externe de la cloison (9) se trouve à quelque distance de la paroi limitant extérieurement la chambre (8), de manière à provoquer un courant d'air sous la cloison (9) dans la direction de la circonférence externe du rotor (7), puis en retour au-dessus de la cloison (9) vers l'arbre (4), en ce que des pales de guidage (10) sont aménagées sous et sur la cloison (9), en ce que le rotor (7) comporte un passage d'évacuation de liquide (11) dans le voisinage de la paroi fermant la chambre en sa circonférence, et en ce qu'un passage d'amenée (21, 22) et un passage d'évacuation (23) destinés respectivement à l'entrée et à la sortie de gaz dans la chambre (8) sont disposés près de l'axe du rotor (7) et séparés l'un de l'autre par ladite cloison (9).

2. Dispositif selon la revendication 1, caractérisé en ce que le liquide est amené à l'intérieur du rotor (7) par l'intermédiaire d'un arbre (4) qui supporte le rotor (7).
